# EUROPÄISCHE PATENTSCHRIFT

(11) **EP 3 889 025 B1**
(45) Veröffentlichungstag und Bekanntmachung des Hinweises auf die Patenterteilung: **04.01.2023**
(21) Anmeldenummer: 20167912.3
(22) Anmeldetag: 03.04.2020
(51) Int. Cl.: B62M 6/45, B62M 6/60

(54) **ELEKTROFAHRRAD**
ELECTRIC BICYCLE
BICYCLETTE ÉLECTRIQUE

(43) Veröffentlichungstag der Anmeldung: 06.10.2021
(73) Patentinhaber: Amprio GmbH, 41460 Neuss (DE)
(72) Erfinder: DR. MISGELD, Berno Johannes Engelbert, 41460 Neuss (DE); GREVEN, Dietmar, 41460 Neuss (DE)
(74) Vertreter: terpatent Patentanwälte ter Smitten Eberlein-Van Hoof Rütten Daubert

(56) Entgegenhaltungen:
- EP-A1- 3 251 936
- EP-A1- 3 299 272
- JP-A- 2019 155 963

## Beschreibung

Die Erfindung bezieht sich auf ein mehrrädriges Elektrofahrrad mit einem Traktionsmotor, der mindestens ein Vorderrad und/oder mindestens ein Hinterrad antreibt, und mit einer Schiebehilfe-Steuerung, die eine Schiebehilfe-Funktion zur Verfügung stellt, mit deren Hilfe das Elektrofahrrad in einem Schiebebetrieb, also wenn eine Schiebeperson das Elektrofahrrad schiebt jedoch nicht über die Tretkurbel antreibt, durch den Traktionsmotor bis zu einer beispielsweise gesetzlich festgelegten Grenzgeschwindigkeit unterstützend antreibt.

Aus DE 10 2016 209 570 B3 ist ein Elektrofahrrad mit einer Schiebehilfe-Steuerung bekannt, die im Schiebemodus eine konstante Schiebegeschwindigkeit einstellt. Allerdings kann diese Geschwindigkeit für die Schiebeperson zu hoch sein, beispielsweise dann, wenn es sich lokal um eine Steigung handelt, die die Schiebeperson nicht mit derselben Geschwindigkeit begehen kann, wie beispielsweise eine Horizontalebene.

Das Dokument EP3299272 A1 offenbart ferner einen Elektrofahrrad mit einem Vorderrad, einem Hinterrad, einem elektrischen Traktionsmotor, der das Hinterrad antreibt, einem Traktionsakkumulator zur Versorgung des Traktionsmotors mit elektrischer Energie, einer Elektrofahrrad-Steuerung zur Ansteuerung des Traktionsmotors und einer Schiebehilfe-Steuerung zur Steuerung einer durch den Traktionsmotor unterstützten adaptiven Schiebehilfe-Funktion, wobei das Elektrofahrrad einen Inklinations-Sensor zur Bestimmung des Inklinationswinkels des Elektrofahrrads gegenüber der terrestrischen Horizontalen, einen Traktionsmotor-Drehmomentermittler zur Ermittlung des aktuellen Traktionsmotor-Drehmoments, einen Elektrofahrrad-Geschwindigkeits-Sensor zur Ermittlung der aktuellen Elektrofahrrad-Geschwindigkeit, und einen Elektrofahrradgewicht-Speicher, in dem ein Elektrofahrrad-Gewichtswert gespeichert ist.

Aufgabe der Erfindung vor diesem Hintergrund ist es, ein Elektrofahrrad mit einer preiswerten adaptiven Schiebehilfe-Steuerung zu schaffen. Diese Aufgabe wird erfindungsgemäß gelöst mit einem Elektrofahrrad mit den Merkmalen des Anspruchs 1.

Das erfindungsgemäße Elektrofahrrad weist ein Vorderrad, ein Hinterrad, einen elektrischen Traktionsmotor, der das Vorderrad und/oder das Hinterrad antreibt, einen Traktionsakkumulator zur Versorgung des Traktionsmotors mit elektrischer Energie und eine Elektrofahrrad-Steuerung zur Ansteuerung des Traktionsmotors auf. Ferner weist das Elektrofahrrad eine adaptive Schiebehilfe-Steuerung auf, die eine durch den Traktionsmotor unterstützte auto-adaptive Schiebehilfe-Funktion in Abhängigkeit von einer Interaktionskraft zwischen der Schiebeperson und dem Elektrofahrrad zur Verfügung stellt. Unter einer auto-adaptiven Schiebehilfe-Funktion ist eine Schiebehilfe-Unterstützungsfunktion zu verstehen, die die Antriebsleistung des Traktionsmotors im Schiebemodus in Abhängigkeit von der Interaktionskraft zwischen der Schiebeperson und dem Elektrofahrrad steuert. Bei Erhöhung der Interaktionskraft in Elektrofahrrad-Schieberichtung wird die Antriebsleistung des Traktionsmotors erhöht, wohingegen bei Verringerung der Interaktionskraft die Antriebsleistung des Traktionsmotors verringert oder auf Null reduziert wird. Die Erhöhung oder Verringerung der Antriebsleistung des Traktionsmotors kann grundsätzlich auf verschiedene Arten erfolgen, beispielsweise durch Erhöhung bzw. Verringerung der Soll-Geschwindigkeit als Stellgröße und/oder durch Erhöhung bzw. Verringerung der Traktionsmotor-Antriebsleistung als Stellgröße.

Erfindungsgemäß ist vorgesehen, dass zur Ermittlung der Interaktionskraft kein die Interaktionskraft direkt ermittelnder Kraftsensor genutzt wird, so dass dieser gegebenenfalls vollständig entfallen kann. Ein derartiger Kraftsensor, der beispielsweise im Bereich des Lenker-Vorbaus angeordnet sein könnte, ist aufwendig und technisch anspruchsvoll. Ferner könnte ein derartiger Kraftsensor ausschließlich Interaktionskräfte detektieren, die auf den Elektrofahrrad-Lenkbügel wirken, könnte jedoch keine Interaktionskräfte detektieren, die an einer anderen Stelle des Elektrofahrrads auftreten.

Das Elektrofahrrad weist einen Inklinations-Sensor zur Bestimmung des momentanen Inklinationswinkels des Elektrofahrrads gegenüber der terrestrischen Horizontalen in Schieberichtung bzw. in der Längsrichtung des Elektrofahrrads auf.

Das Elektrofahrrad weist ferner einen Traktionsmotor-Drehmomentermittler zur exakten Ermittlung des aktuellen Traktionsmotor-Drehmoments in Echtzeit auf. Durch den Traktionsmotor-Drehmomentermittler wird also das von dem Traktionsmotor in dem betreffenden Augenblick generierte elektrische Drehmoment exakt ermittelt. Dies kann beispielsweise dadurch erfolgen, dass elektrisch zwischen der Leistungselektronik und dem mechanischen Traktionsmotor eine Strommessung erfolgt, um auf diese Weise möglichst exakt die tatsächliche elektrische Gesamt-Antriebsleistung des Traktionsmotors zu ermitteln.

Das Elektrofahrrad weist ferner einen Elektrofahrrad-Geschwindigkeits-Sensor auf, durch den die momentane Geschwindigkeit des Elektrofahrrads über Grund exakt und in Echtzeit ermittelt wird. Dies kann beispielsweise durch einen entsprechenden hochauflösenden Geschwindigkeits-Sensor an einem Hinterrad oder einem Vorderrad des Elektrofahrrads erfolgen.

Schließlich weist das Elektrofahrrad einen Elektrofahrradgewicht-Speicher auf, in dem der aktuelle Elektrofahrradgewichtswert gespeichert ist. Das Elektrofahrradgewicht kann als konstanter Gewichtswert programmiert bzw. gespeichert sein. Der Elektrofahrradgewicht kann jedoch besonders bevorzugt regelmäßig, oder beispielsweise bei jedem Einschalten einer Elektrofahrrad-Steuerung, durch einen Gesamtgewichtsermittler ermittelt werden, beispielsweise durch entsprechende kurze Beschleunigungs-Messungen am fahrerlosen Elektrofahrrad. Der Gesamtgewichtsermittler übermittelt den aktuell ermittelten Elektrofahrrad-Gewichtswert an den Elektrofahrradgewicht-Speicher.

Erfindungsgemäß ist vorgesehen, dass die Schiebehilfe-Steuerung die, bezogen auf das Elektrofahrrad, nach vorne gerichtete Interaktionskraft ermittelt, die zwischen der das Elektrofahrrad schiebenden Schiebeperson und dem Elektrofahrrad wirkt. Die Interaktionskraft wird durch die Schiebehilfe-Steuerung aus dem aktuellen Inklinationswinkel, dem aktuellen Traktionsmotor-Drehmoment, der aktuellen Elektrofahrrad-Geschwindigkeit und dem aktuellen Elektrofahrradgewichtswert ermittelt. Die Schiebehilfe-Steuerung ermittelt die Interaktionskraft vom Grundsatz her aus der erwarteten motorischen Elektrofahrrad-Beschleunigung, die sich aus dem Traktionsmotor-Drehmoment, dem Elektrofahrrad-Inklinationswinkel und dem Elektrofahrradgewicht ergibt, und der tatsächlichen Elektrofahrrad-Beschleunigung, die sich aus dem zeitlichen Verlauf der aktuellen Elektrofahrrad-Geschwindigkeits-Werte ergibt. Falls die Differenz zwischen der erwarteten Elektrofahrrad-Beschleunigung und der tatsächlichen Elektrofahrrad-Beschleunigung praktisch Null ist, ist auch die Interaktionskraft Null. Bei einer Interaktionskraft von weniger als Null wird die Antriebsleistung des Traktionsmotors verringert, da angenommen wird, dass die Schiebeperson die Schiebe-Geschwindigkeit reduzieren möchte.

Wenn die Interaktionskraft deutlich über Null ist, wird angenommen, dass die Schiebeperson die Schiebe-Geschwindigkeit erhöhen möchte, so dass auch die Antriebsleistung des Traktionsmotors entsprechend erhöht wird.

Allerdings wird im Schiebebetrieb oberhalb einer maximal zulässigen Schiebegeschwindigkeit die Antriebsleistung des Traktionsmotors entsprechend heruntergeregelt. So ist beispielsweise in Deutschland die maximal zulässige Schiebegeschwindigkeit auf 6 km/h festgelegt, sodass oberhalb dieser maximal zulässigen Schiebegeschwindigkeit der Traktionsmotor keine Unterstützung mehr leisten darf.

Mit der erfindungsgemäßen Schiebehilfe-Steuerung wird unter Zurückgreifen auf Sensoren und Daten, die bei einem Elektrofahrrad ohnehin vorhanden sind, eine auto-adaptive Schiebehilfe geschaffen, die auf der Hardware-Seite keinen nennenswerten zusätzlichen Aufwand erfordert. Die Adaptivität der Schiebehilfe erlaubt eine ökonomische und intuitive Steuerung der Schiebehilfe durch die Schiebeperson. Die Schiebeperson ist ferner nicht darauf festgelegt, die Interaktionskräfte beispielsweise ausschließlich über den Lenkerbügel in das Elektrofahrrad einzuleiten, sondern kann das Elektrofahrrad auch über den Fahrradsattel, den Gepäckträger oder direkt am Rahmen ergreifen bzw. erfassen und die Interaktionskräfte dort einwirken lassen.

Vorzugsweise ist bei einem Elektrofahrrad mit einem stufenlosen oder abgestuften Verstellgetriebe zwischen dem Traktionsmotor und dem angetriebenen Rad ein Traktionsmotor-Drehzahlermittler vorgesehen, der die Drehzahl des Traktionsmotors ermittelt. Beispielsweise kann die Drehzahl des Traktionsmotors durch einen in den Traktionsmotor standardmäßig integrierten Drehpositions-Sensor ermittelt werden, der die Motorrotor-Position detektiert und zur Steuerung der Kommutierung eines elektronisch kommutierten Traktionsmotors ohnehin erforderlich ist.

Der Elektrofahrrad-Geschwindigkeits-Sensor ist an einem Vorderrad und/oder einem Hinterrad des Elektrofahrrads angeordnet. Aus der Drehgeschwindigkeit des Vorderrads bzw. des Hinterrads wird die Elektrofahrrad-Geschwindigkeit ermittelt. Der Schiebehilfe-Steuerung ist vorzugsweise ein Getriebeübersetzungs-Ermittler zugeordnet, der aus der Elektrofahrrad-Geschwindigkeit und aus der Traktionsmotor-Drehzahl eine Getriebeübersetzung des Verstellgetriebes ermittelt. Die Getriebeübersetzung ist deshalb von Bedeutung, weil das an dem angetriebenen Vorderrad oder Hinterrad wirkende Drehmoment proportional von der Übersetzung des Verstellgetriebes abhängig ist. In einem hohen Gang, also bei einer hohen Getriebeübersetzung, ist das am Hinterrad oder am Vorderrad zur Verfügung stehende maximale AntriebsDrehmoment relativ klein, sodass bei hohem Elektrofahrrad-Gewicht und/oder einer Steigung gegebenenfalls nicht genügend Drehmoment zur Verfügung steht, um das Elektrofahrrad in Bewegung zu setzen.

Besonders bevorzugt ist vorgesehen, dass der Getriebeübersetzungs-Ermittler bei einer ungeeigneten ermittelten Getriebeübersetzung des Verstellgetriebes eine Verstell- beziehungsweise Schaltempfehlung ausgibt, beispielsweise an ein Display und oder an einen Soundgenerator. Alternativ oder ergänzend kann die Verstellempfehlung auch als Schaltbefehl an ein elektrisch geschaltetes Verstellgetriebe ausgegeben werden.

In einer bevorzugten Ausführung der Erfindung ist ein Gesamtgewichtsermittler vorgesehen, der das aktuelle Elektrofahrradgewicht ermittelt und als Gewichtswert an den Elektrofahrradgewicht-Speicher übermittelt. Zur Ermittlung des Elektrofahrradgewichts kann ein oder können mehrere Kraftsensoren vorgesehen sein, die beispielsweise die Gewichtsbelastung eines Gepäcksträgers ermitteln. Das Elektrofahrradgewicht kann jedoch auch durch die Auswertung der Elektrofahrrad-Beschleunigung während einer kurzen Aktivierung des Traktionsmotors oder auf andere geeignete Weise ermittelt werden. In dem Elektrofahrradgewicht-Speicher wird dann stets ein aktueller Elektrofahrradgewichtswert hinterlegt, so dass die Ermittlung der Interaktionskraft durch die Schiebehilfe-Steuerung auf der Grundlage eines genauen und aktuellen Wertes für das Elektrofahrrad-Gewicht erfolgt.

Im Folgenden wird ein Ausführungsbeispiel der Erfindung anhand der Zeichnungen näher erläutert. Es zeigen:
Figur 1 ein Elektrofahrrad im Schiebebetrieb, in dem es von einer Schiebeperson geschoben wird, und

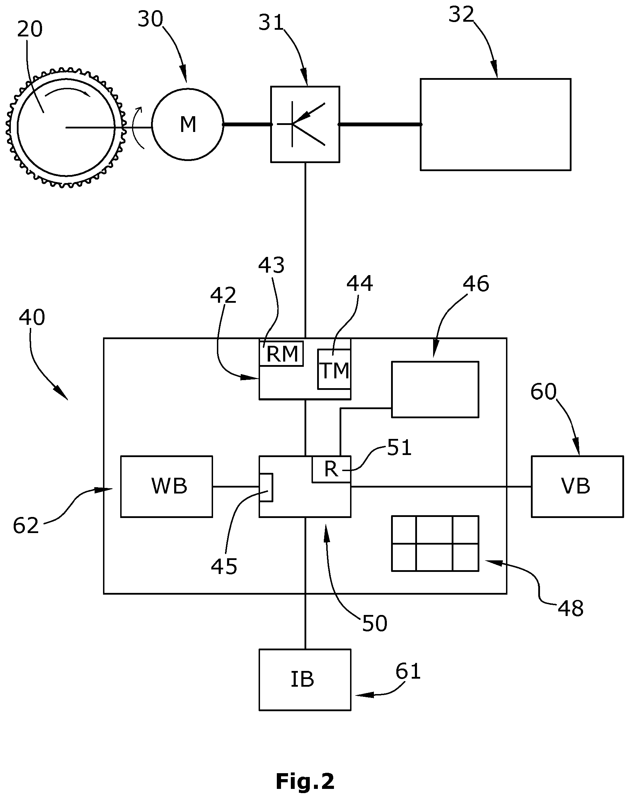

Figur 2 eine schematische Darstellung der Elektrofahrrad-Steuerung einschließlich einer Schiebehilfe-Steuerung.

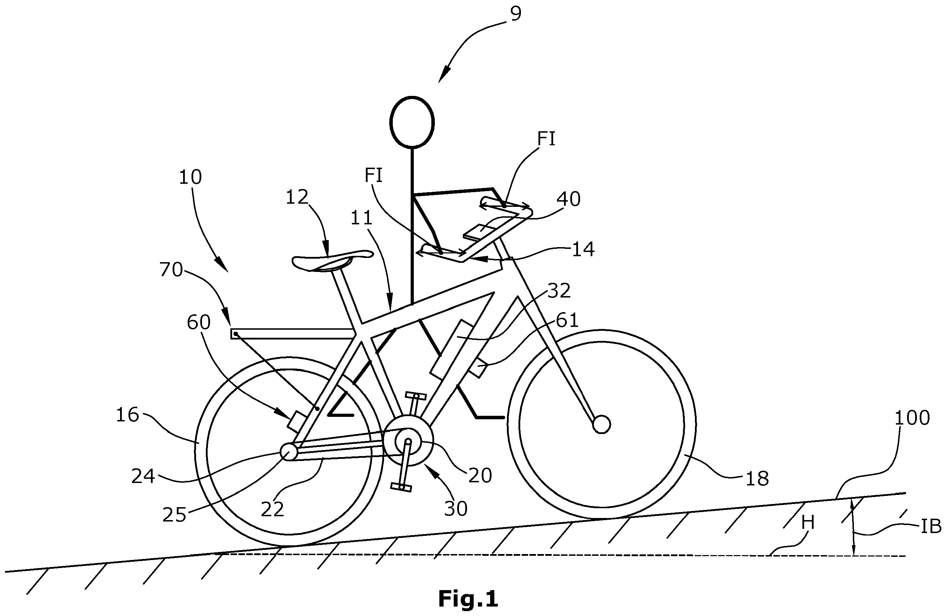

In der Figur 1 ist ein als sogenanntes Pedelec ausgebildetes Elektrofahrrad 10 dargestellt, das einen steifen Fahrradrahmen 11 aufweist, der unter anderem ein Vorderrad 18, ein Hinterrad 16, einen Gepäckträger 70 und einen Fahrradsattel 12 trägt. Das Elektrofahrrad 10 weist einen als sogenannten Mittelmotor ausgebildeten elektrischen Traktionsmotor 30 auf, der im Bereich der Tretkurbel-Welle angeordnet ist und durch den bedarfsweise ein Kettenblatt 20 angetrieben wird, von dem das Drehmoment über eine Antriebskette 22 auf ein Hinterrad-Ritzel 24 übertragen wird. Dem Hinterrad 16 ist vorliegend ein manuell betätigtes Verstellgetriebe 25 zugeordnet, durch das die Getriebeübersetzung zwischen dem Kettenblatt 20 und der Hinterrad-Felge manuell und in Stufen eingestellt werden kann. Das Verstellgetriebe kann alternativ auch stufenlos ausgebildet sein. Im Pedelec-Betrieb ist an dem Kettenblatt 20 die humane Antriebsleistung und die Traktionsmotor-Antriebsleistung addiert.

Das Elektrofahrrad 10 weist einen aufladbaren Traktionsakkumulator 32 zur Versorgung des Traktionsmotors 30 mit elektrischer Energie auf. Das Elektrofahrrad 10 weist ferner eine Elektrofahrrad-Steuerung 40 auf, durch die im Pedelec-Betrieb die Antriebsleistung des Traktionsmotors 30 in Abhängigkeit von der humanen Antriebsleistung gesteuert wird. Die Elektrofahrrad-Steuerung 40 ist vorliegend in Form eines Bediengeräts am Lenkerbügel 14 realisiert, das als Human Interface ein Tastenfeld 48 und ein optisches Display 46 aufweist. Die Elektrofahrrad-Steuerung 40 steuert eine Motor-Leistungselektronik 31 an, die den Traktionsmotor 30 mit der von der Traktionsbatterie 32 zur Verfügung gestellten elektrischen Energie bedarfsweise versorgt.

Das Elektrofahrrad 10 weist vorliegend am Hinterrad 16 einen Elektrofahrrad-Geschwindigkeits-Sensor 60 auf, der zeitlich hoch aufgelöst die aktuelle Elektrofahrrad-Geschwindigkeit VB ausgibt. Unter einer hohen Auflösung des Geschwindigkeits-Sensors 60 ist beispielsweise eine Auflösung des an dem Hinterrad 16 befestigten Geberrings von 6° oder kleiner zu verstehen. Durch die hohe Auflösung des Geschwindigkeits-Sensors 60 kann beispielsweise 60 Mal oder häufiger pro Umdrehung des Hinterrades 16 in Echtzeit die Elektrofahrrad-Geschwindigkeit VB ermittelt werden, so dass insbesondere auch die aktuelle Elektrofahrrad-Beschleunigung AB in Echtzeit und mit hoher zeitlicher Auflösung ermittelt werden kann. Bei einem 26 bzw. 28 Zoll-Hinterrad kann auf diese Weise bei einer Geschwindigkeit von 5 km/h in einer Sekunde ca. 30 Mal die Elektrofahrrad-Geschwindigkeit VB bzw. die Elektrofahrrad-Beschleunigung AB ermittelt werden, also in einer zeitlichen Auflösung von etwa 35 ms.

Das Elektrofahrrad 10 weist einen Inklinations-Sensor 61 an dem Fahrradrahmen 11 auf, durch den der Inklinationswinkel IB des Elektrofahrrads 10 gegenüber der terrestrischen Horizontalen H zeitnah, also in Echtzeit, ermittelt wird. Der Elektrofahrrad-Inklinationswinkel IB entspricht in etwa der lokalen Neigung des Untergrunds 100, auf dem das Vorderrad 18 und das Hinterrad 16 aufstehen, gegenüber der terrestrischen Horizontalen H. Der Inklinations-Sensor kann alternativ in einer Antriebseinheit vorgesehen sein, die auch den Antriebsmotor 30 aufweist.

Das Elektrofahrrad 10 weist einen Traktionsmotor-Drehmomentermittler 44 auf, durch den das momentane elektrische Traktionsmotor-Drehmoment TM in Echtzeit ermittelt wird. Beispielsweise kann hierfür im Bereich der Leistungselektronik 31 eine Strommessung eingerichtet sein, sodass aus dem Summen-Motorstrom unmittelbar auf das momentan von dem Traktionsmotor 30 abgegebene Drehmoment TM geschlossen werden kann. Das Elektrofahrrad 10 weist ferner einen Traktionsmotor-Drehzahlermittler 43 auf, der die Drehzahl des Traktionsmotors ermittelt. Der Traktionsmotor-Drehzahlermittler 43 kann beispielsweise die Signale eines in dem Traktionsmotor vorgesehenen Rotorpositions-Sensors auswerten, der in einem elektronisch kommutierten Traktionsmotor für die Steuerung der elektrischen Kommutierung erforderlich ist.

Schließlich weist das Elektrofahrrad 10 innerhalb der Elektrofahrrad-Steuerung 40 einen Elektrofahrradgewicht-Speicher 62 auf, in dem der aktuelle Elektrofahrrad-Gewichtswert MB des Elektrofahrrads 10 gespeichert ist.

Der Schiebehilfe-Steuerung ist ein Gesamtgewichtsermittler 45 zugeordnet, der das aktuelle Elektrofahrradgewicht MB ermittelt und diesen Wert an den Elektrofahrradgewicht-Speicher 62 übermittelt. Das aktuelle Elektrofahrradgewicht MB kann beispielsweise durch die Auswertung einer kurzen rein motorischen Beschleunigung des Elektrofahrrads durch den Traktionsmotor indirekt regelmäßig ermittelt werden, beispielsweise bei jedem Einschalten der Elektrofahrrad-Steuerung. Alternativ kann der Elektrofahrradgewichtswert MB fest einprogrammiert sein oder manuell eingegeben worden sein.

Innerhalb der Elektrofahrrad-Steuerung 40 ist eine Schiebehilfe-Steuerung 50 angeordnet, die nicht notwendigerweise über eine eigene Hardware verfügt, sondern als reines Software-Modul ausgebildet sein kann. Im Schiebemodus, der beispielsweise über einen entsprechenden Tastendruck einer Schiebeperson 9 auf dem Tastenfeld 48 manuell eingeschaltet werden kann, ermittelt die Schiebehilfe-Steuerung 50 aus dem momentanen Inklinationswinkel IB, dem momentanen Traktionsmotor-Drehmoment TM und dem momentanen Elektrofahrradgewichtswert MB eine Erwartungs-Beschleunigung AE, und vergleicht diese mit der momentanen tatsächlichen Elektrofahrrad-Geschwindigkeit VB bzw. der momentanen tatsächlichen Elektrofahrrad-Beschleunigung AB in Elektrofahrrad-Fahrtrichtung.

Aus der Differenz der erwarteten Elektrofahrrad-Beschleunigung AE und der gemessenen momentanen Elektrofahrrad-Beschleunigung AB wird die Interaktionskraft FI errechnet, mit der die Schiebeperson 9 das Elektrofahrrad 10 schiebt. In Abhängigkeit von der ermittelten Interaktionskraft FI wird anschließend die Antriebsleistung des Traktionsmotors 30 erhöht, verringert, nicht verändert oder gegebenenfalls abgeschaltet. Die angepasste Veränderung der Antriebsleistung kann beispielsweise dadurch erfolgen, dass bei einer geschwindigkeitsgeführten Steuerung die Soll-Geschwindigkeit des Elektrofahrrads entsprechend verändert wird. Alternativ kann jedoch auch einfach die dem Traktionsmotor 30 zugeführte elektrische Leistung entsprechend verändert werden.

Die Schiebehilfe-Steuerung 50 überwacht dabei stets, dass eine motorische Unterstützung nur bis zu einer Schiebe-Grenzgeschwindigkeit von beispielsweise 6 km/h erfolgt.

Der Schiebehilfe-Steuerung 50 ist ein Getriebeübersetzungs-Ermittler 51 zugeordnet, der bei aktivem Schiebebetrieb aus der aktuellen Traktionsmotor-Drehzahl RM des Traktionsmotor-Drehzahlermittlers 43 und aus der Elektrofahrrad-Geschwindigkeit VB des Elektrofahrrad-Geschwindigkeits-Sensors 60 die aktuelle Getriebeübersetzung R des Verstellgetriebes 25 ermittelt. Bei einer ungeeigneten oder ungünstigen Getriebeübersetzung R des Verstellgetriebes 25 wird eine Verstellbeziehungsweise Schaltempfehlung an das Display 46 ausgegeben, sodass die Schiebeperson 9 einen optischen Hinweis erhält, eine geeignetere Getriebeübersetzung R für den Schiebebetrieb manuell einzustellen.

## Patentansprüche

1. Elektrofahrrad (10) mit einem Vorderrad (18), einem Hinterrad (16), einem elektrischen Traktionsmotor (30), der das Vorderrad (18) und/oder das Hinterrad (16) antreibt, einem Traktionsakkumulator (32) zur Versorgung des Traktionsmotors (30) mit elektrischer Energie, einer Elektrofahrrad-Steuerung (40) zur Ansteuerung des Traktionsmotors (30) und einer Schiebehilfe-Steuerung (50) zur Steuerung einer durch den Traktionsmotor (30) unterstützten adaptiven Schiebehilfe-Funktion in Abhängigkeit von einer Interaktionskraft (FI) zwischen einer Schiebeperson (9) und dem Elektrofahrrad (10), wobei
das Elektrofahrrad (10) einen Inklinations-Sensor (61) zur Bestimmung des Inklinationswinkels (IB) des Elektrofahrrads (10) gegenüber der terrestrischen Horizontalen (H), einen Traktionsmotor-Drehmomentermittler (44) zur Ermittlung des aktuellen Traktionsmotor-Drehmoments (TM), einen Elektrofahrrad-Geschwindigkeits-Sensor (60) zur Ermittlung der aktuellen Elektrofahrrad-Geschwindigkeit (VB), und einen Elektrofahrradgewicht-Speicher (62), in dem ein Elektrofahrrad-Gewichtswert (MB) gespeichert ist, aufweist, und
die Schiebehilfe-Steuerung (50) die nach vorne gerichtete Interaktionskraft (FI) zwischen der Schiebeperson (9) und dem Elektrofahrrad (10) aus dem Inklinationswinkel (IB), dem Traktionsmotor-Drehmoment (TM), der Elektrofahrrad-Geschwindigkeit (VB) und dem Elektrofahrrad-Gewichtswert (MB) ermittelt.

2. Elektrofahrrad (10) nach Anspruch 1, wobei
ein Traktionsmotor-Drehzahlermittler (43) vorgesehen ist, der die Drehzahl (RM) des Traktionsmotors (30) ermittelt,
der Elektrofahrrad-Geschwindigkeits-Sensor (60) an einem Vorderrad und/oder einem Hinterrad (16) des Elektrofahrrads (10) angeordnet ist und aus der Drehgeschwindigkeit des Vorderrads bzw. des Hinterrads (16) die Elektrofahrrad-Geschwindigkeit (VB) ermittelt, und
der Schiebehilfe-Steuerung (50) ein Getriebeübersetzungs-Ermittler (51) zugeordnet ist, der aus der Elektrofahrrad-Geschwindigkeit (VB) und der Traktionsmotor-Drehzahl (RM) eine Getriebeübersetzung (R) eines Verstellgetriebes (25) ermittelt.

3. Elektrofahrrad (10) nach Anspruch 2, wobei der Getriebeübersetzungs-Ermittler (51) bei einer ungeeigneten Getriebeübersetzung (R) des Verstellgetriebes (25) eine Verstellempfehlung ausgibt.

4. Elektrofahrrad (10) nach einem der vorangegangenen Ansprüche, wobei ein Gesamtgewichtsermittler (45) vorgesehen ist, der den aktuellen Elektrofahrrad-Gewichtswert (MB) ermittelt und an den Elektrofahrradgewicht-Speicher (62) übermittelt.

## Claims

1. Electric bicycle (10) with a front wheel (18), a rear wheel (16), an electric traction motor (30) which drives the front wheel (18) and/or the rear wheel (16), a traction accumulator (32) for supplying the traction motor (30) with electric energy, an electric bicycle controller (40) for controlling the traction motor (30), and a push assist controller (50) for controlling an adaptive push assist function assisted by the traction motor (30) in response to an interaction force (FI) between a pushing person (9) and the electric bicycle (10), wherein
the electric bicycle (10) comprises an inclination sensor (61) for determining the inclination angle (IB) of the electric bicycle (10) with respect to the terrestrial horizontal (H), a traction motor torque detector (44) for determining the actual traction motor torque (TM) an electric bicycle speed sensor (60) for detecting the current electric bicycle speed (VB), and an electric bicycle weight storage (62) in which an electric bicycle weight value (MB) is stored, and
the push assist controller (50) determines the forward interaction force (FI) between the pushing person (9) and the electric bicycle (10) from the inclination angle (IB), the traction motor torque (TM), the electric bicycle speed (VB), and the electric bicycle weight value (MB).

2. Electric bicycle (10) according to claim 1, wherein
a traction motor speed sensor (43) is provided which determines the rotational speed (RM) of the traction motor (30),
the electric bicycle speed sensor (60) being arranged on a front wheel and/or a rear wheel (16) of the electric bicycle (10) and determining the electric bicycle speed (VB) from the rotational speed of the front wheel and/or the rear wheel (16), and
the push-assist control (50) having associated therewith a transmission ratio determiner (51) which determines a transmission ratio (R) of a variable transmission (25) from the electric bicycle speed (VB) and the traction motor speed (RM).

3. Electric bicycle (10) according to claim 2, wherein the transmission ratio determiner (51) outputs an adjustment recommendation in case of an inappropriate transmission ratio (R) of the variable transmission (25).

4. Electric bicycle (10) according to any one of the preceding claims, wherein a total weight detector (45) is provided which determines the current electric bicycle weight value (MB) and transmits it to the electric bicycle weight storage (62).

## Revendications

1. Bicyclette électrique (10) avec une roue avant (18), une roue arrière (16), un moteur de traction électrique (30) qui entraîne la roue avant (18) et/ou la roue arrière (16), un accumulateur de traction (32) pour alimenter le moteur de traction (30) en énergie électrique, un contrôleur de vélo électrique (40) pour commander le moteur de traction (30) et un contrôleur d'aide à la poussée (50) pour commander une fonction d'aide à la poussée adaptative assistée par le moteur de traction (30) en fonction d'une force d'interaction (FI) entre une personne poussant (9) et le vélo électrique (10), dans lequel
le vélo électrique (10) comprend un capteur d'inclinaison (61) pour déterminer l'angle d'inclinaison (IB) de la bicyclette électrique (10) par rapport à l'horizontale terrestre (H), un détecteur de couple du moteur de traction (44) pour déterminer le couple actuel du moteur de traction (TM), un capteur de vitesse de vélo électrique (60) pour déterminer la vitesse actuelle du vélo électrique (VB), et une mémoire de poids de la bicyclette électrique (62) dans laquelle est stockée une valeur de poids de la bicyclette électrique (MB), et
le contrôleur d'aide à la poussée (50) détermine la force d'interaction vers l'avant (FI) entre la personne poussant (9) et le bicyclette électrique (10) à partir de l'angle d'inclinaison (IB), du couple du moteur de traction (TM), de la vitesse de la bicyclette électrique (VB) et de la valeur du poids de la bicyclette électrique (MB).

2. Bicyclette électrique (10) selon la revendication 1, dans laquelle
un détecteur de vitesse de rotation du moteur de traction (43) est prévu, qui détermine la vitesse de rotation (RM) du moteur de traction (30),
le capteur de vitesse de vélo électrique (60) est placé sur une roue avant et/ou une roue arrière (16) du vélo électrique (10) et détermine la vitesse de vélo électrique (VB) à partir de la vitesse de rotation de la roue avant ou de la roue arrière (16), et
le contrôleur d'aide à la poussée (50) est associé à un enquêteur de ratio de transmission (51) qui, à partir de la vitesse du vélo électrique (VB) et de la vitesse de rotation du moteur de traction (RM), détermine un ratio de transmission (R) d'une boîte de vitesses variable (25).

3. Bicyclette électrique (10) selon la revendication 2, dans laquelle l'enquêteur de ratio de transmission (51) émet une recommandation de réglage si le ratio de transmission (R) de la boîte de vitesses variable (25) n'est pas approprié.

4. Bicyclette électrique (10) selon l'une des revendications précédentes, dans laquelle il est prévu un détecteur de poids total (45) qui détermine la valeur de poids actuelle de la bicyclette électrique (MB) et la transmet à la mémoire de poids de la bicyclette électrique (62).
